# EUROPÄISCHE PATENTSCHRIFT

(11) **EP 1 166 568 B1**
(45) Veröffentlichungstag und Bekanntmachung des Hinweises auf die Patenterteilung: **20.10.2004**
(21) Anmeldenummer: 00920416.5
(22) Anmeldetag: 31.03.2000
(51) Int. Cl.: H04Q 3/00, H04Q 11/04, H04M 3/51

(54) **VERFAHREN UND TELEKOMMUNIKATIONSNETZ ZUM ÜBERTRAGEN VON DATEN ZWISCHEN MITGLIEDERN EINES OPERATORSERVICES**
METHOD AND TELECOMMUNICATION NETWORK FOR TRANSMITTING DATA BETWEEN MEMBERS OF AN OPERATOR SERVICE
PROCEDE ET RESEAU DE TELECOMMUNICATION POUR TRANSMETTRE DES DONNEES ENTRE DES MEMBRES D'UN SERVICE D'OPERATEUR

(30) Priorität: 31.03.1999 DE 19914794
(43) Veröffentlichungstag der Anmeldung: 02.01.2002
(73) Patentinhaber: SIEMENS AKTIENGESELLSCHAFT, 80333 München (DE)
(72) Erfinder: ADLI, Wahid, A-1220 Wien (AT)
(86) Internationale Anmeldenummer: PCT/DE2000/000980
(87) Internationale Veröffentlichungsnummer: WO 2000/060881

(56) Entgegenhaltungen:
- EP-A- 0 425 161
- US-A- 5 469 504
- FEKETY M A: "ISDN: COST JUSTIFIABLE APPLICATIONS" ELECTRO CONFERENCE RECORD, Bd. 15, 9. - 11. Mai 1990, Seiten 318-322, XP000173342 LOS ANGELES, USA
- ECKHARDT B ET AL: "PASST: POSITION ACCESS SWITCHING SYSTEM FOR TELEPHONY NETWORKS" PHILIPS TELECOMMUNICATION AND DATA REVIEW, Bd. 47, Nr. 4, 1. Dezember 1989 (1989-12-01), Seiten 14-31, XP000094892 HILVERSUM, NL

## Beschreibung

Die Erfindung bezieht sich auf ein Verfahren zum Übertragen von Daten zwischen Teilnehmern eines Telekommuhikationsnetzes, die Mitglieder eines Operatorservice sind, wobei für Verbindungen über eine Vermittlungsstelle zumindest ein Gesprächskanal und ein Datenkanal zur Verfügung stehen.

Ebenso bezieht sich die Erfindung auf ein Telekommunikationsnetz, bei welchem an eine Vermittlungsstelle Teilnehmer angeschlossen sind, welche Mitglieder eines Operatorservice sind, und die Vermittlungsstelle zumindest einen Koordinationsprozessor sowie periphere Anschlußgruppen mit einem Gruppenprozessor besitzt.

In Telefonnetzwerken werden sogenannte Operatorservices benötigt, welche ein wesentliches Bindeglied zwischen den Kunden des Netzwerkes und den Netzbetreibern darstellen. Die Aufgaben eines solchen Operatorservices sind vielfältig, wobei eine Hauptaufgabe darin liegt, den Teilnehmern auf Anfrage Auskünfte zu erteilen. Beispielsweise kann ein Teilnehmer ein Operatorservice in einem ISDN-Netz anrufen und eine Auskunft erbitten. Der zuständige Operator kann nun, falls notwendig, z. B. auf eine Datenbank zugreifen, wobei ihm sodann eine Information bezüglich eines anderen Teilnehmers auf dem Bildschirm seines PC vorliegt. Nach einem Verbindungswunsch des Operators, der z. B. durch Tastendruck erfolgen kann, wird der Operator mit dem gesuchten Teilnehmer verbunden. Der Operator ist nun sowohl mit dem Ursprungsteilnehmer, als auch mit dem gesuchten Teilnehmer verbunden und kann wahlweise mit einem der Teilnehmer sprechen. Wieder auf weiteren Tastendruck erfolgt eine Signalisierung auf dem D-Kanal, und nun werden die Anschlußlagen beider Teilnehmer der peripheren Anschlußgruppe bekanntgegeben, und die Verbindung der Sprachkanäle erfolgt über das Koppelnetz, so daß letztlich eine direkte Verbindung zwischen den beiden Teilnehmern vorliegt. Das soeben beschriebene Beispiel soll nur eine der Möglichkeiten bzw. Aufgaben eines Operatorservices darstellen.

Große Netze mit vielen Teilnehmern erfordern entsprechend große Operatorservice-Systeme mit vielen, meist hierarchisch strukturierten Systemteilnehmern (Operatoren), wie beispielsweise bei dem ADMOSS genannten System der Anmelderin. Meldungen der Operatoren zu einer Vermittlungsstelle erfolgen, wie bereits erwähnt, bei einem ISDN-Netz im D-Kanal, und zwar in einer Punkt-zu-Punkt-Konfiguration bei daueraktiver Schicht 2 des OSI Schichtenmodells. Die Meldungen erfolgen in einem ISDN-Netz durch das D-Kanal Protokoll gestützt, wozu auch das Blue Book, Volume VI - Fascicle VI. 11, "Digital Subscribe Signalling System No. 1 (DSS1), Network Layer, User-Network Management", Recommendations Q. 930 - Q. 940, insbesondere auf Recommendation Q. 931 verwiesen wird.

Die Operatoren sind üblicherweise in sogenannten Call Centern stationiert und ihre jeweilige aus Endgerät, PC, Bildschirm etc. bestehende üblicherweise und im folgenden "Konsole" genannte Einrichtung ist direkt an das System angeschlossen bzw. mit der lokalen Vermittlungsstelle verbindbar. Während des Betriebes des Operatorservice besteht häufig das Bedürfnis, Daten von einem Operator zu einem anderen zu übertragen. Beispielsweise sollte ein Operator, der mit einer Anfrage, etwa aus sprachlichen Gründen nicht zurecht kommt, mit einem anderen Operator in Verbindung treten und ihm den jeweiligen Bildschirminhalt, oder Teile davon, seiner Konsole übermitteln können ("Screen Transfer"). Um dies zu ermöglichen, muß nach dem Stand der Technik eine Gesprächsverbindung - bei ISDN in einem B-Kanal - aufgebaut werden, über welche dann der Datentransfer durchgeführt wird.

Eine Aufgabe der Erfindung liegt darin, ein Verfahren anzugeben, welches ein einfaches Übertragen von Daten zwischen Operatoren eines Operatorservice ermöglicht, ohne daß ein eigener Gesprächskanal aufgebaut werden muß.

Diese Aufgabe wird mit einem Verfahren der eingangs genannten Art gelöst, bei welchem erfindungsgemäß seitens eines ersten rufenden Operators an seine periphere Anschlußgruppe der Vermittlungsstelle eine Anforderung samt der Identifikation eines zweiten, gerufenen Operators und zumindest einem ersten Datensatz über einen Datenkanal gesandt wird, die Identifikation dem Gruppenprozessor der Anschlußgruppe zugeleitet wird und von diesem eine Meldung zu dem Koordinationsprozessor mit der Aufforderung zur Bekanntgabe von Lageinformationen bezüglich des gerufenen Operators gesandt wird, in einer Tabelle des Koordinationsprozessors dem gerufenen Teilnehmer zugeordnete Lageinformation ermittelt und zu dem Gruppenprozessor des rufenden Operators gesandt werden, der Gruppenprozessor des rufenden Operators über eine Datenschnittstelle eine Datenverbindung aufbaut, und der erste Datensatz über einen Datenkanal zu dem gerufenen Operator gesandt wird, und seitens des Gruppenprozessors in der Anschlußgruppe des gerufenen Operators die Verbindung in dem Datenkanal bis zu dem rufenden Operator aufgebaut wird.

Die Erfindung ermöglicht es, mit geringem Aufwand und äußerst rasch Daten bei Bedarf zwischen den Operatoren eines Operatorservice auszutauschen, was zu einer gesteigerten Effizienz des Servicesystems führt und letztlich die Kundenfreundlichkeit erhöht. Dabei wird jedoch kein Gesprächskanal blockiert, d.h. ein Gesprächskanal bleibt für daneben geführte Gespräche frei.

Es ist zweckmäßig, wenn die Lageinformation die Angabe des Konzentrators, des Ports und der Anschlußgruppe enthält.

Weiters kann es vorteilhaft sein, wenn der Datenverkehr zwischen peripheren Anschlußgruppen über Report Interfaces abläuft. Die Konzeption "Report Interface" ist dem Fachmann kannt und beispielsweise in EWSD: Anschlußgruppen LTG-Teilsystem Beschreibung A 30308-X2720-X-4-18, herausgegeben vom Bereich öffentliche Vermittlungssysteme, Siemens AG, 1985, beschrieben. Sie ermöglicht einen sehr raschen und einfach aufzubauenden Datenverkehr.

Die Arbeit der Operatoren wird erleichtert, falls die zu übertragenden Daten zumindest Teile eines Bildschirmhalters und/oder einer gesprochenen Anfrage enthalten.

Besonders zweckmäßig ist das Verfahren, falls das Kommunikationsnetz ein ISDN-Netz ist, der Datenkanal der D-Kanal und die Gesprächskanäle B-Kanäle sind.

Die gestellte Aufgabe wird auch mit einem Telekommunikationsnetz der oben erwähnten Art ermöglicht, bei welchem erfindungsgemäß in dem Koordinationsprozessor eine Liste eingerichtet ist, welche neben der Identifikation der Operatoren deren Lageinformation, wie Anschlußgruppe, Portnummer und Konzentrator ermittelt, und die Vermittlungsstelle dazu eingerichtet ist, eine Anforderung eines rufenden Operators zu empfangen, welche eine Identifikation eines gerufenen Teilnehmers und zumindest einen ersten Datensatz enthält, aufgrund der Identifikation unter Benutzung der Liste die Lageinformation des gerufenen Operators an den Gruppenprozessor des rufenden Operators zu senden, über eine Datenschnittstelle eine Datenverbindung aufzubauen und den Datensatz zu dem gerufenen Operator zu senden.

Die damit erzielbaren Vorteile sowie jene, die in Zusammenhang mit den Merkmalen der abhängigen Ansprüche 8 bis 12 stehen, entsprechen den in Verbindung mit dem Verfahren und der Erfindung genannten.

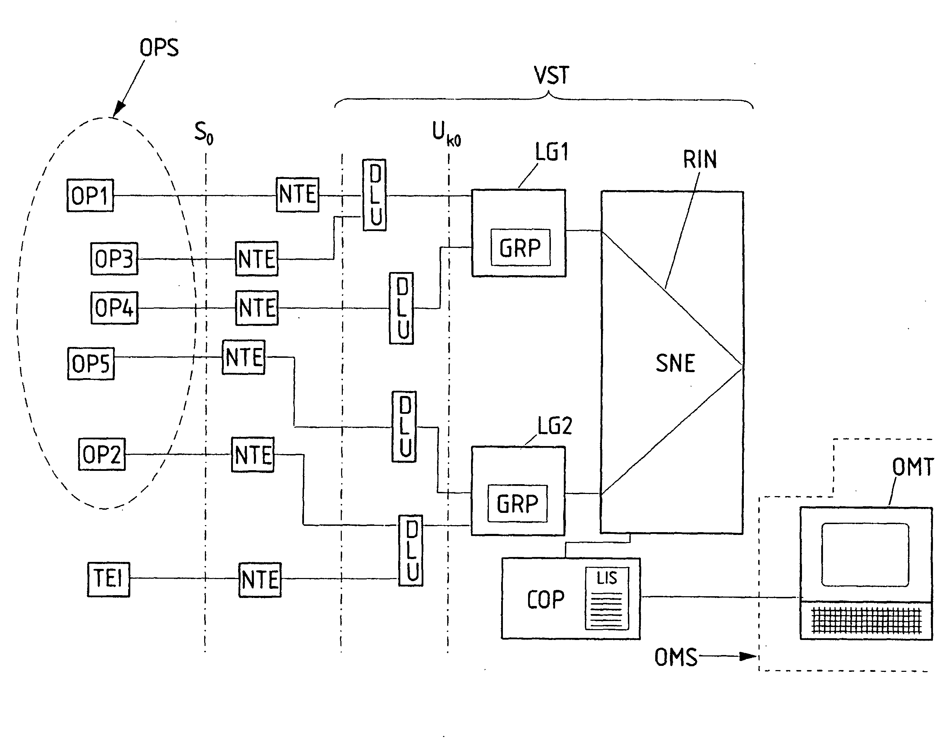

Die Erfindung samt weiterer Vorteile ist im folgenden anhand einer beispielsweisen Ausführungsform unter Zuhilfenahme der Zeichnung näher erläutert. Diese zeigt in ihrer einzigen Figur den prinzipiellen Aufbau eines Netzes mit einer Vermittlungsstelle und einem Operatorservice.

In der Figur erkennt man links oben einige Teilnehmer OP 1 .... OP 5 eines Operatorservices OPS, wobei hier nicht auf die Hierarchie innerhalb der Teilnehmer OP1, OP2 ... eingegangen wird. Alle Teilnehmer OP1, OP2 ... sind neben üblichen Netzteilnehmern TEI eines Telekommunikationsnetzes, im vorliegenden Fall eines ISDN-Netzes, und daher über eine S₀-Schnittstelle in das Netz eingebunden, d.h. hier je an einem Netzwerkanschluß NTE angeschlossen.

Eine Vermittlungsstelle VST 5 des Netzes ist rechts oben gezeigt und sie besitzt in bekannter Weise ein Koppelnetz SNE und daran angeschlossene periphere Anschlußgruppen LG 1, LG 2. Zur Steuerung der Vermittlungsstelle VST, vor allem des Koppelnetzes SNE, ist ein Koordinationsprozessor COP vorgesehen. Gleichfalls in bekannter Weise enthält jede periphere Anschlußgruppe LG 1, LG 2 einen Gruppenprozessor GRP, und an jede periphere Anschlußgruppe sind bei diesem Ausführungsbeispiel über eine Uₖ₀-Schnittstelle Konzentratoren DLU (Digital Line Unit) angeschlossen. Auch jeder dieser Konzentratoren DLU besitzt mehrere Eingänge für die bereits vorhin genannten Netzwerkanschlüsse. Bei größeren Vermittlungsstellen können an ein Koppelnetz SNE bis zu 512 periphere Anschlußgruppen (Line Trunk Group), LTC angeschlossen sein, und an jede Anschlußgruppe sind üblicherweise zwei Konzentratoren DLU angeschlossen.

In einer peripheren Anschlußgruppe LG 1, LG 2 laufen verschiedene Programme ab, die von dem Gruppenprozessor GRP unterstützt werden, z. B. erfolgt hier der größte Teil des Verbindungsaufbaues, die Signalisierung, der Codeempfang, etc. Im allgemeinen werden 70 % des Verbindungsaufbaues in den peripheren Anschlußgruppen durchgeführt, wogegen dem Koordinationsprozessor COP vor allem Routingaufgaben zukommen.

Zu der Vermittlungsstelle gehört weiters ein Operation und Maintenance System OMS mit einem Operation und Maintenance Terminal OMT, an dem Überwachungspersonal den Zustand der Vermittlungsstelle ständig beobachten und Fehler erkennen kann.

Die Teilnehmer OP 1 .... OP 5 des Operatorservices OPS besitzen üblicherweise Arbeitsplätze mit Personalcomputern, die ISDN-Karten und spezielle Software sowie Sprechgarnituren für die Operatoren enthalten. Seitens dieser Teilnehmer OP 1, OP 2, ... können Nachrichten an die Vermittlungsstelle, vor allem an die peripheren Anschlußgruppen LG 1, LG 2 gesandt werden, wobei diese Nachrichten im Gruppenprozessor GRP verarbeitet werden und zu entsprechenden weiteren Maßnahmen, z. B. einem Verbindungsaufbau führen. Die Meldungen werden in einer Punkt-zu-Punkt-Konfiguration bei daueraktiver Schicht 2 und in einem ISDN-Netz im D-Kanal gesendet.

Der Koordinationsprozessor COP der Vemittlungsstelle VST enthält auch eine Liste LIS bzw. Tabelle, in welcher den Identifikationen der einzelnen Operatoren OP 1 .... OP 5 eine Lageinformation zugeordnet ist. Diese Lageinformation enthält insbesondere die Angabe des Konzentrators DLU, am welchen der Operator angeschlossen ist, weiters die zugehörige periphere Anschlußgruppe LG 1 oder LG 2 sowie die Portnummer des Operators.

Bei der folgenden Beschreibung einer Nachrichtenübermittlung bzw. eines Verbindungsaufbaues sei angenommen, daß der Operator OP 1 Information in Form von beispielsweise Bildschirmdaten oder aber auch Gesprächsdaten an den Operator OP 2 weiterleiten möchte, weil z. B. eine Rückfrage bei Operator OP 2 erforderlich ist.

Wenn der Operator OP 1 von seiner Konsole aus senden möchte, kann er beispielsweise eine bestimmte Menübox aufrufen, in welche er die Identifikation oder eine Identifikationsnummer des gewünschten Operators, jedes Operators OP 2, eingibt. Daraufhin wird über den D-Kanal eine Anforderung zusammen mit der Identifikation und mit einem ersten Datensatz, der für den zweiten, gerufenen Operator OP 2 bestimmt ist, abgesandt und gelangt zunächst zu dem Gruppenprozessor GRP der zugehörigen Anschlußgruppe LG 1, welcher sodann eine Meldung zu dem Koordinationsprozessor COP der Vermittlungsstelle VST sendet, welche die Aufforderung enthält, Lageinformationen bezüglich des gerufenen Operators OP 2 bekanntzugeben.

Mit Hilfe der bereits erwähnten Liste LIS ermittelt der Koordinationsprozessor COP die dem gerufenen Teilnehmer OP 2 zugeordnete Lageinformation, wie periphere Anschlußgruppe und Portnummer und sendet diese Information zu dem Gruppenprozessor GRP des rufenden Operators OP 1. Der Gruppenprozessor baut nun über eine Datenschnittstelle RIN (Report Interface) eine Datenverbindung auf, und sodann wird der erste Datensatz über den Datenkanal zu dem gerufenen Operator OP 2 gesandt. Weiters baut der Gruppenprozessor GRP in der Anschlußgruppe LG 2 des gerufenen Operators OP 2 die Verbindung bis zu dem rufenden Operator OP 1 auf, so daß nun eine durchgehende Datenverbindung zwischen beiden Operatoren OP 1 und OP 2 vorliegt. Ein über diese Verbindung laufender Datenverkehr kann in der Folge von jeder Seite, d.h. sowohl von dem Operator OP 1 als auch von dem Operator OP 2 aus jederzeit beendet werden. Es ist verständlich, daß die Erfindung alleine schon deshalb vorteilhaft ist, weil der Aufbau eines Gesprächskanals zwischen den Operatoren nicht mehr erforderlich ist und Ressourcen des Netzes nicht angetastet werden bzw. für andere Zwecke verwendet werden können.

## Patentansprüche

1. Verfahren zum Übertragen von Daten zwischen Operatoren (OP1 ... OP5) eines Telekommunikationsnetzes (NET), die Mitglieder eines Operatorservice (OPS) sind, wobei für Verbindungen über eine Vermittlungsstelle (VST) zumindest ein Gesprächskanal und ein Datenkanal zur Verfügung stehen,
**dadurch gekennzeichnet,**
**daß** seitens eines ersten rufenden Operators (OP1) an seine periphere Anschlußgruppe (LG1) der Vermittlungsstelle (VST) eine Anforderung samt der Identifikation eines zweiten, gerufenen Operators (OP2) und zumindest einem ersten Datensatz über einen Datenkanal gesandt wird,
die Identifikation dem Gruppenprozessor (GRP) der Anschlußgruppe (LG1) zugeleitet wird und von diesem eine Meldung zu dem Koordinationsprozessor (COP) mit der Aufforderung zur Bekanntgabe von Lageinformationen bezüglich des gerufenen Operators (OP2) gesandt wird,
in einer Liste (LIS) des Koordinationsprozessors (COP) dem gerufenen Operator zugeordnete Lageinformation ermittelt und zu dem Gruppenprozessor (GRP) des rufenden Operators (OP1) gesandt werden,
der Gruppenprozessor des rufenden Operators (OP1) über eine Datenschnittstelle (RIN) eine Datenverbindung aufbaut, und
der erste Datensatz über einen Datenkanal zu dem gerufenen Operator (OP2) gesandt wird, und
seitens des Gruppenprozessors (GRP) in der Anschlußgruppe (LG2) des gerufenen Operators (OP2) die Verbindung in dem Datenkanal bis zu dem rufenden Operator aufgebaut wird.

2. Verfahren nach Anspruch 1,
**dadurch gekennzeichnet, daß** die Lageinformation die Angabe des Konzentrators (DLU), des Ports und der Anschlußgruppe (LG2) enthält.

3. Verfahren nach Anspruch 1 oder 2,
**dadurch gekennzeichnet, daß** der Datenverkehr zwischen peripheren Anschlußgruppen (LG1, LG2) über Report Interfaces abläuft.

4. Verfahren nach einem der Ansprüche 1 bis 3,
**dadurch gekennzeichnet, daß** die zu übertragenden Daten zumindest einen Teil von an einem Bildschirm ausgebbaren Bildschirminformationen umfassen und/oder zumindest einen Teil einer gesprochenen Anfrage enthalten.

5. Telekommunikationsnetz, bei welchem an eine Vermittlungsstelle (VST) Operatoren (OP1, OP2) angeschlossen sind, welche Mitglieder eines Operatorservice (OPS) sind, und die Vermittlungsstelle zumindest einen Koordinationsprozessor (COP) sowie periphere Anschlußgruppen (LG1, LG2) mit einem Gruppenprozessor (GRP) besitzt,
**dadurch gekennzeichnet,**
**daß** in dem Koordinationsprozessor (COP) eine Liste (LIS) eingerichtet ist, mit deren Hilfe der Koordinations prozessor (COP) neben der Identifikation der Operatoren (OP1 ... OP5) and deren Lageinformation, wie Anschlußgruppe, Portnummer und Konzentrator ermittelt, und die Vermittlungsstelle (VST) dazu eingerichtet ist, eine Anforderung eines rufenden Operators (OP1) zu empfangen, welche eine Identifikation eines gerufenen Operators (OP2) und zumindest einen ersten Datensatz enthält, aufgrund der Identifikation unter Benutzung der Liste (LIS) die Lageinformation des gerufenen Operators (OP2) an den Gruppenprozessor (GRP) des rufenden Operators (OP1) zu senden, über eine Datenschnittstelle (RIN) eine Datenverbindung aufzubauen und den Datensatz zu dem gerufenen Operator (OP2) zu senden.

6. Telekommunikationsnetz nach Anspruch 5,
**dadurch gekennzeichnet, daß** die Lageinformation die Angabe des Konzentrators (DLU), des Ports und der Anschlußgruppe (LG2) enthält.

7. Telekommunikationsnetz nach Anspruch 5 oder 6,
**dadurch gekennzeichnet, daß** für den Datenverkehr zwischen peripheren Anschlußgruppen (LG1, LG2) Report Interfaces vorgesehen sind.

8. Telekommunikationsnetz nach einem der Ansprüche 5 bis 7,
**dadurch gekennzeichnet, daß** die zu übertragenden Daten zumindest einen Teil von an einem Bildschirm ausgebbaren Bildschirminformationen umfassen und/oder zumindest einen Teil einer gesprochenen Anfrage enthalten.

9. Telekommunikationsnetz nach einem der Ansprüche 5 bis 8,
**dadurch gekennzeichnet, daß** es ein ISDN-Netz ist, der Datenkanal der D-Kanal und die Gesprächskanäle B-Kanäle sind.

## Claims

1. Method for transmitting data between operators (OP1... OP5) of a telecommunications network (NET), who are members of an operator service (OPS), at least a call channel and a data channel being available for connections via a switching centre (VST),
**characterized**
**in that** a first, calling operator (OP1) sends to its peripheral line group (LG1) of the switching centre (VST) a request together with the identification of a second, called operator (OP2) and at least a first data record via a data channel,
the identification is forwarded to the group processor (GRP) of the line group (LG1) and said group processor sends a message to the coordination processor (COP) with the request for disclosure of position information with regard to the called operator (OP2),
in a list (LIS) of the coordination processor (COP), position information assigned to the called operator is determined and sent to the group processor (GRP) of the calling operator (OP1),
the group processor of the calling operator (OP1) establishes a data connection via a data interface (RIN), and
the first data record is sent via a data channel to the called operator (OP2), and
the group processor (GRP) in the line group (LG2) of the called operator (OP2) establishes the connection in the data channel up to the calling operator.

2. Method according to Claim 1,
**characterized in that** the position information contains the indication of the concentrator (DLU), of the port and of the line group (LG2).

3. Method according to Claim 1 or 2,
**characterized in that** the data traffic between peripheral line groups (LG1, LG2) proceeds via report interfaces.

4. Method according to Claims 1 to 3,
**characterized in that** the data to be transmitted comprise at least a part of screen information which can be output on a screen, and/or contain at least a part of a spoken enquiry.

5. Telecommunications network in which operators (OP1, OP2) who are members of an operator service (OPS) are connected to a switching centre (VST), and the switching centre has at least a coordination processor (COP) and also peripheral line groups (LG1, LG2) with a group processor (GRP),
**characterized**
**in that** a list (LIS) is set up in the coordination processor (COP), which determines with the aid of the list (LIS), in addition to the identification of the operators (OP1... OP5), also the position information thereof, such as line group, port number and concentrator, and the switching centre (VST) is set up for receiving a request of a calling operator (OP1), which contains an identification of a called operator (OP2) and at least a first data record, for sending, on the basis of the identification, using the list (LIS), the position information of the called operator (OP2) to the group processor (GRP) of the calling operator (OP1), for establishing a data connection via a data interface (RIN), and for sending the data record to the called operator (OP2).

6. Telecommunications network according to Claim 5,
**characterized in that** the position information contains the indication of the concentrator (DLU), of the port and of the line group (LG2).

7. Telecommunications network according to Claim 5 or 6,
**characterized in that** report interfaces are provided for the data traffic between peripheral line groups (LG1, LG2).

8. Telecommunications network according to Claims 5 to 7,
**characterized in that** the data to be transmitted comprise at least a part of screen information which can be output on a screen, and/or contain at least a part of a spoken enquiry.

9. Telecommunications network according to Claims 5 to 8,
**characterized in that** it is an ISDN network, the data channel is the D channel and the call channels are B channels.

## Revendications

1. Procédé pour la transmission de données entre des opérateurs (OP1 ... OP5) d'un réseau de télécommunication (NET), qui sont adhérents d'un service opérateur (OPS), au moins un canal de conversation et un canal de données étant à disposition pour des liaisons au moyen d'un centre de commutation (VST),
**caractérisé en ce**
**qu'**un premier opérateur (OP1) appelant envoie à son groupe de raccordement (LG1) périphérique du centre de commutation (VST) une demande avec l'identification d'un second opérateur (OP2) appelé et au moins un premier ensemble de données au moyen d'un canal de données,
l'identification est transférée au processeur de groupe (GRP) du groupe de raccordement (LG1) et un message est envoyé par ce groupe au processeur de coordination (COP) avec la demande de communication d'informations de position en ce qui concerne l'opérateur (OP2) appelé,
des informations de position attribuées à l'opérateur appelé sont déterminées dans une liste (LIS) du processeur de coordination (COP) et sont envoyées au processeur de groupe (GRP) de l'opérateur (OP1) appelant,
le processeur de groupe de l'opérateur (OP1) appelant établit une liaison de données au moyen d'une interface de données (RIN) et le premier ensemble de données est envoyé par un canal de données à l'opérateur (OP2) appelé et
le processeur de groupe (GRP) établit dans le groupe de raccordement (LG2) de l'opérateur (OP2) appelé la liaison dans le canal de données jusqu'à l'opérateur appelant.

2. Procédé selon la revendication 1,
**caractérisé en ce que** l'information de position contient l'indication du concentrateur (DLU), du port et du groupe de raccordement (LG2).

3. Procédé selon la revendication 1 ou 2,
**caractérisé en ce que** le trafic de données entre les groupes de raccordement (LG1, LG2) périphériques se déroule au moyen de Report Interfaces.

4. Procédé selon l'une quelconque des revendications 1 à 3,
**caractérisé en ce que** les données à transmettre comprennent au moins une partie d'informations d'écran pouvant être éditées sur un écran et/ou contiennent au moins une partie d'une demande parlée.

5. Réseau de télécommunication, sur lequel des opérateurs (OP1, OP2), qui sont adhérents d'un service opérateur (OPS), sont raccordés à un centre de commutation (VST) et le centre de commutation comprend au moins un processeur de coordination (COP) ainsi que des groupes de raccordement (LG1, LG2) périphériques avec un processeur de groupe (GRP),
**caractérisé en ce**
**qu'**une liste (LIS) est aménagée dans le processeur de coordination (COP), liste à l'aide de laquelle le processeur de coordination (COP) détermine outre l'identification des opérateurs (OP1...OP5) également leur information de position, comme le groupe de raccordement, le numéro de port et le concentrateur, et le centre de commutation (VST) est aménagé pour recevoir une demande d'un opérateur (OP1) appelant, qui contient une identification d'un opérateur (OP2) a ppelé et au m oins un premier e nsemble de données, envoyer sur la base de l'identification avec l'utilisation de la liste (LIS) l'information de position de l'opérateur (OP2) appelé au processeur de groupe (GRP) de l'opérateur (OP1) appelant, établir une liaison de données au moyen d'une interface de données (RIN) et envoyer l'ensemble de données à l'opérateur (OP2) appelé.

6. Réseau de télécommunication selon la revendication 5,
**caractérisé en ce que** l'information de position contient l'indication du concentrateur (DLU), du port et du groupe de raccordement (LG2).

7. Réseau de télécommunication selon la revendication 5 ou 6,
**caractérisé en ce que** des Report Interfaces sont prévues pour le trafic de données entre des groupes de raccordement (LG1, LG2) périphériques.

8. Réseau de télécommunication selon l'une quelconque des revendications 5 à 7,
**caractérisé en ce que** les données à transmettre comprennent au moins une partie d'informations d'écran pouvant être éditées sur un écran et/ou contiennent au moins une partie d'une demande parlée.

9. Réseau de télécommunication selon l'une quelconque des revendications 5 à 8,
**caractérisé en ce que** ce réseau est un réseau ISDN, le canal de données le canal D et les canaux de conversation des canaux B.
